# EUROPÄISCHE PATENTSCHRIFT

(11) **EP 1 595 443 B1**
(45) Veröffentlichungstag und Bekanntmachung des Hinweises auf die Patenterteilung: **23.01.2008**
(21) Anmeldenummer: 05009892.0
(22) Anmeldetag: 06.05.2005
(51) Int. Cl.: A01F 15/07

(54) **Maschine zum Aufnehmen und Pressen von landwirtschaftlichem Erntegut**
Device for picking up and pressing of harvested agricultural crop
Dispositif pour ramasser et compacter des matières récoltées

(30) Priorität: 11.05.2004 DE 102004023758
(43) Veröffentlichungstag der Anmeldung: 16.11.2005
(73) Patentinhaber: Maschinenfabrik Bernard Krone GmbH, 48480 Spelle (DE)
(72) Erfinder: Krone, Bernard Dr.-Ing. E.h., 48480 Spelle (DE); van Bassen, Alois, 49832 Freren (DE)

(56) Entgegenhaltungen:
- WO-A-20/05009112
- DE-A1- 19 517 385
- DE-A1- 19 720 489
- US-A- 5 243 806
- US-A- 5 581 973
- US-A- 6 050 052

## Beschreibung

Die Erfindung betrifft eine Maschine zum Aufnehmen und Pressen von landwirtschaftlichem Erntegut, wie Heu, Stroh oder Anwelkgut oder dergleichen, mit einer Ballenkammer zur Erstellung eines Erntegutballens und mit einer Wickelvorrichtung zur Einfassung des Ballens mit einem Wickelmaterial, wobei die Wickelvorrichtung einen Vorratsspeicher zur Bevorratung von Wickelmaterial, eine Schneidvorrichtung und eine das Wickelmaterial transportierende Zuführvorrichtung aufweist, welche aus einer Betriebsstellung in eine Zuführstellung überführbar ist.

Bekannt aus der EP 432 830 B1 ist eine Maschine der vorgenannten Art, die nach Beendigung des Ballenformvorgangs ein Wickelmaterial mit Hilfe einer Zuführvorrichtung in den Einlass der Ballenkammer transportiert. Dort wird das Wickelmaterial erfasst und weiter um den Ballen transportiert, um diesen entlang seiner Außenseite mit dem Wickelmaterial zu bedecken. Nachteilig ist hierbei, dass das Wickelmaterial während des Zuführvorgangs oder der Ballenbildung ungebremst von der Vorratsrolle abgegeben wird. Weiterhin ist von Nachteil, dass das Wickelmaterial direkt in den Einlass der Ballenkammer zwischen zwei rotierenden Elementen eingeführt wird, da eines dieser beiden Elemente gegen die Bewegungsbahn des Wickelmaterials, bzw. der Zuführvorrichtung rotiert, während das andere mit der Bewegungsbahn bzw. der Bewegungsrichtung der Zuführvorrichtung rotiert. Es besteht somit das Problem, dass das Wickelmaterial den Einlass verstopft, bzw. in nicht gewünschte Maschinenbereiche weitertransportiert wird. Um dieses Problem zu verhindern, ist das Wickelmaterial beidseitig geführt und wird weit in Richtung Kammer durch den Einlass vorgeschoben. Hierdurch gelangen Teile der Zuführvorrichtung möglicherweise in Kontakt mit den rotierenden Walzen und verschleißen schneller bzw. werden eventuell sogar beschädigt. Des weiteren muss das Wickelmaterial sofort aus dem Vorratsspeicher abgezogen werden, was für einen sicheren Start des Wickelvorgangs unvorteilhaft ist.

Die US 5,581,973 A zeigt und beschreibt eine Rundballenpresse, deren Ballenkammer im wesentlichen von einem Stabkettenförderer gebildet wird, wobei in einem vorderen Bereich oberhalb einer Gutzuführöffnung eine Zuführöffnung für Netz oder dgl. Umhüllmaterial dadurch entsteht, dass die untere Begrenzung der Zuführöffnung von einer Förderwalze und die obere Begrenzung von einer Umlenkung des Stabkettenförderers gebildet ist. Die Zuführung von Netz oder dgl. Umhüllmaterial für den fertiggestellten Rundballen erfolgt durch einen etwa schnabelförmig ausgeführten Zuführarm, dessen Klemmhälften das Ende der Umhüllmaterialbahn beim Zuführvorgang geklemmt halten und in die Zuführöffnung zwischen der oberen Umlenkung des Stabkettenförderers und der unteren Förderwalze in die Ballenkammer einführen. Eine ähnliche Anordnung zur Einführung von Netz oder dgl. Umhüllmaterial in die Ballenkammer der Rundballenpresse wird auch in der US 5,243,806 A offenbart. Beide Vorrichtungen sind mit dem Mangel behaftet, dass insbesondere durch das frei vor dem schnabelförmigen Zuführarm herabhängende Ende der Umhüllmaterialbahn die Gefahr besteht, dass dieses freie Ende der Umhüllmaterialbahn von der Umlenkung des Stabkettenförderers oder sonstigen, mit dem Rundballen umlaufenden Förderelementen erfasst und in eine nicht vorgesehene Umlaufbahn gebracht wird.

Es ist daher Aufgabe der vorliegenden Erfindung eine Maschine zum Aufnehmen und Pressen von landwirtschaftlichem Erntegut mit einer verbesserten Wickelvorrichtung auszustatten.

Die Aufgabe wird gelöst durch eine Maschine, die sich dadurch auszeichnet, dass die Wickelvorrichtung einen Zwischenspeicher zur Zwischenspeicherung von Wickelmaterial aufweist, aus dem während des Zuführungsvorgangs Wickelmaterial entnehmbar ist, wobei die erfindungsgemäße Maschine eine Wickelvorrichtung aufweist, die wenigstens ein der Zuführvorrichtung zumindest bereichsweise nachgeordnetes Förderelement aufweist, das das Wickelmaterial von der Zuführvorrichtung übernimmt und in Richtung des Einlasses der Ballenkammer weiterfördert. Somit greift die Zuführvorrichtung, die maßgeblich für die Überbrückung der Distanz von der Vorratsspeicher zum Einlass der Ballenkammer verantwortlich ist, nicht in den kritischen Bereich des Einlasses ein und das Wickelmaterial kann dennoch funktionssicher geführt in den Bereich des Einlasses transportiert werden.

Der Einlass in die Ballenkammer wird begrenzt von zumindest einer Walze, so daß es naheliegend ist, das Förderelement ebenfalls als Walze auszubilden, auf der das Wickelmaterial von einer Zuführvorrichtung abgelegt wird. Für eine sorgfältige Übergabe des Wickelmaterials ist es entsprechend sinnvoll, diese Walzen relativ dicht aneinander anzuordnen. Gleichzeitig ist es auch denkbar, einen Zuführtisch, der mit dem Förderelement eine Ablagefläche ausbildet, vor der Walze anzuordnen, um so die korrekte Übergabe des Wickelmaterials zu gewährleisten.

Gleichzeitig kann das Förderelement auch in etwa mittig vor dem Einlass der Kammer angeordnet sein, um die Weiterführung des Wickelmaterials weiter zu verbessern.

Weiterhin wird die Zuführung von Wickelmaterial vereinfacht, wenn das Wickelmaterial schwerkraftbeaufschlagt in der Zuführstellung einen Kontakt mit dem Förderelement ausbildet, so daß es bei auch eventuell zusätzlicher Ausbildung einer Wickelmaterialführungsbahn aus Förderelement und Teilen der Zuführvorrichtung, zu einer weiteren Verbesserung der Wickelmaterialführung kommt, da das Wickelmaterial automatisch in Kontakt mit dem Förderelement gelangt.

Weitere Vorteile und Einzelheiten der Erfindung ergeben sich aus den noch nicht beschriebene Unteransprüchen sowie den nachfolgend beschriebenen schematischen Darstellungen. In der Zeichnung zeigt:
- Figur 1: einen Längsschnitt durch eine erfindungsgemäße Maschine,
- Figur 2: vergrößert schematisch den Bereich X gemäß Fig. 1, wobei die Wickelvorrichtung hier in einer Zuführstellung gezeigt ist,
- Figur 3: den Gegenstand nach Figur 2 in einer Abgabe- bzw. Wickelstellung,
- Figur 4: den Gegenstand nach Figur 2 in einer Schneidstellung, die auch die Grundstellung während des Nichtbetriebs der Wickelvorrichtung darstellt.

Eine erfindungsgemäße Maschine 1 zum Aufnehmen und Pressen von landwirtschaftlichen Erntegut weist eine Ballenformeinrichtung 2 auf, die in einer Ballenkammer 3 befindlich ist. Die Ballenkammer 3 besitzt eine Einlassöffnung 4, durch die allgemein mit einer Aufnahmevorrichtung 6 aufgenommenes Erntegut wie beispielsweise Heu, Stroh oder Anwelkgut in die Ballenkammer 3 befördert werden kann. Ein Einlass 5 dient der Zuführung des Wickelmaterials 28. Eine Antriebsrolle 7 unterteilt die Ballenformeinrichtung 2 in ein Lasttrum 8 und ein Leertrum 9, wobei sich Lasttrum 8 und Leertrum 9 durch die auf den Erntegutballen wirkenden Antriebsmomente unterscheiden. Beiderseits der Einlassöffnung 4 angeordnete Walzen 11 begrenzen zusätzlich die Ballenkammer 3. Zu Beginn eines Ballenformvorgangs liegt das Lasttrum 8 des Wickelbodens 2 zusätzlich an eine Startkammer ausbildende Führungsvorrichtungen 12 an. Bei diesem Ausführungsbeispiel sind die Führungsvorrichtungen 12 als Umlenkrollen ausgebildet, es kann sich hierbei jedoch beispielsweise auch um eine oder mehrere Führungsflächen handeln.

Die Ballenformeinrichtung 2 wird mit Hilfe eines Kraftspeichers 13 des Speichers 14 unter Spannung gehalten. Dadurch liegen bei Beginn der Erntegutaufnahme die zwischen der Antriebsrolle 7 und einer Umlenkrolle 16 befindlichen Abschnitte des Lasttrums 8 der Ballenformeinrichtung 2 annähernd parallel zu den Seitenkanten 17 der die Ballenkammer 3 begrenzten Führungsseitenwände.

Der Speicher 14 weist im wesentlichen einen mit einer Umlenkrolle 18 versehenen Spannarm 19 auf, an den der als Federelement ausgebildete Kraftspeicher 13 angreift. Füllt sich die Ballenkammer 3 mit Erntegut, so wird ein nach außen gerichteter Druck auf das Lasttrum 8 ausgeübt und das Federelement 13 wird gestaucht. Dabei ändert sich die zwischen den Umlenkrollen 21 befindliche und über Umlenkrolle 18 verlaufende Länge der Ballenformeinrichtung 2 und die Erntegutballenvergrößerung geht einher mit einer Vergrößerung der Ballenkammer 3.

Der Speicher 14 weist ein mit 22 bezeichnetes Stellmittel auf, welches ein Begrenzungselement 23 und ein Widerlager 24 als gehäusefeste Abstützung umfasst.

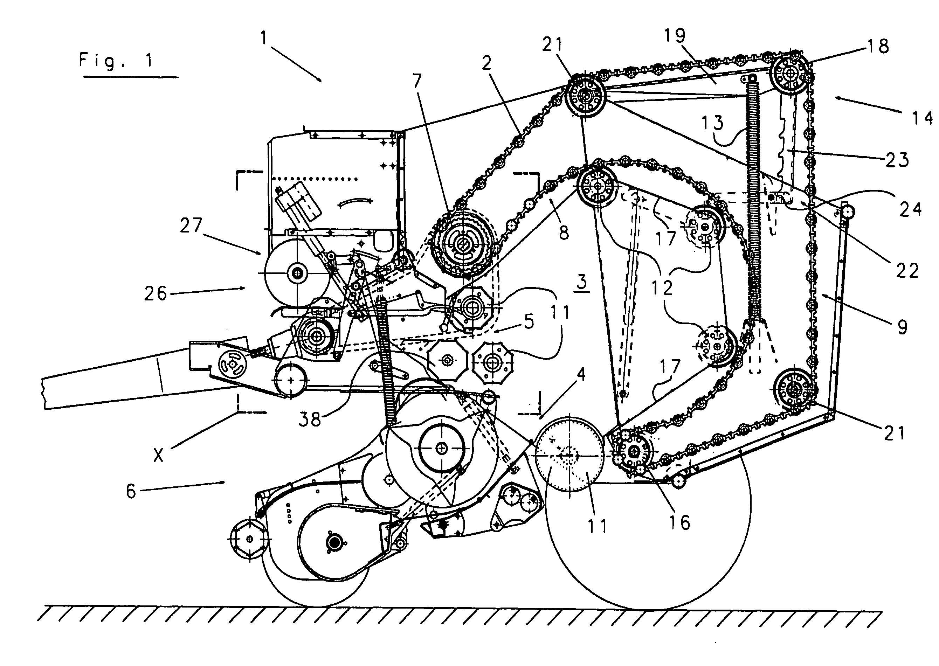

In der in Figur 1 dargestellten Wirkstellung des Begrenzungselements 23 greift eine Ausnehmung am unteren Ende des Begrenzungselements 23 in das Widerlager 24 ein. Hierdurch wird die weitere Freigabe von Wickelboden 2 aus dem Speicher 14 verhindert, so daß ein Ballen mit vorgebbarem Durchmesser geformt werden kann. Die vorher von dem Kraftspeicher 13, der hier ein Federelement ist, auf die Ballenformeinrichtung 2 ausgeübte Kraft wirkt nun nur noch zusätzlich, da das Stellmittel die weitere Kontraktion des Kraftspeichers weitgehend verhindert.

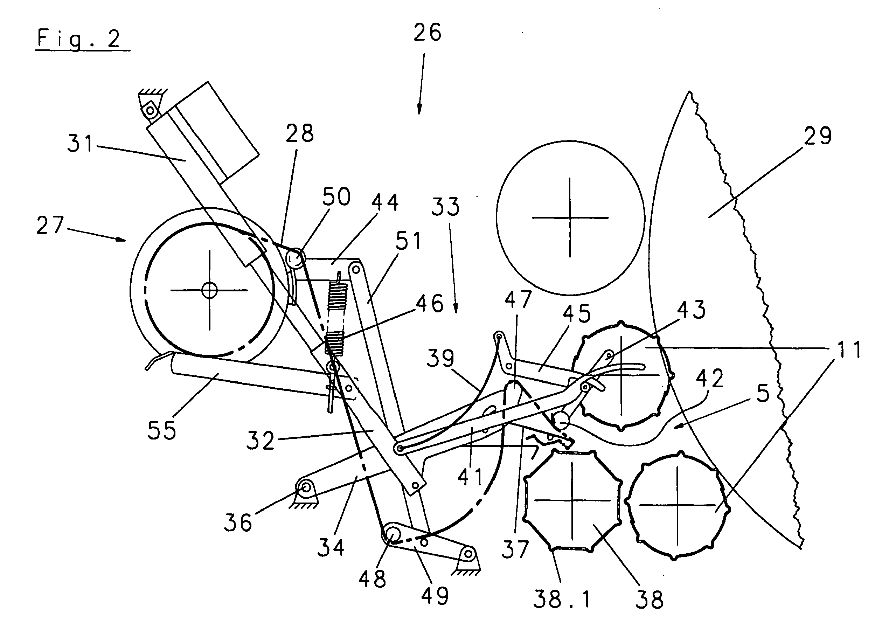

Eine allgemein mit 26 bezifferte Wickelvorrichtung befindet sich im in Fahrtrichtung vorderen Teil der Maschine 1. In der Figur 2 sind die einzelnen Komponenten der Wickelvorrichtung 26 übersichtlicher dargestellt. Die Wickelvorrichtung 26 weist einen Vorratsspeicher 27 auf, der das Wickelmaterial 28, welches für die Einfassung des Erntegutballens 29 vorgesehen ist, bevorratet. Ein von einem elektrischen Linearantrieb ausgebildetes Stellmittel 31 ist schwenkbar gehäusefest abgestützt und weist auf seiner verfahrbaren Seite 32 eine Befestigung mit einer Hebelanordnung 33 auf. Ein erster Schwenkarm 34 ist Teil dieser Hebelanordnung 33 und ebenfalls um eine Achse 36 schwenkbar gehäusefest festgelegt.

An dem der gehäusefesten Abstützung entgegengesetzten Ende des Schwenkarms 34 weist dieser eine Führungsplatte 37 auf, die je nach Ausbildung des Förderelements 38 mit diesem eine Wickelmaterialführungsbahn ausbilden kann. Die Führungsplatte 37 ist an dem als Hebel- oder Schwenkarm 34 ausgebildeten Teil der Zuführvorrichtung ebenfalls schwenkbar gelagert und weist in der Betriebsstellung einen minimalen und in der in Figur 2 gezeigten Zuführstellung einen maximalen Winkel mit der Längsachse des Schwenkarms 34 auf. Durch die Ausbildung des maximalen Winkels wird der Schwenkarm 34 in der Zuführstellung durch die Führungsplatte 37 verlängert, er verbleibt aber aufgrund des Abknickens der Führungsplatte 37 bei Rückführung in die Betriebsstellung in dem Bereich der Wickelvorrichtung. Hierdurch baut die Wickelvorrichtung kleiner.

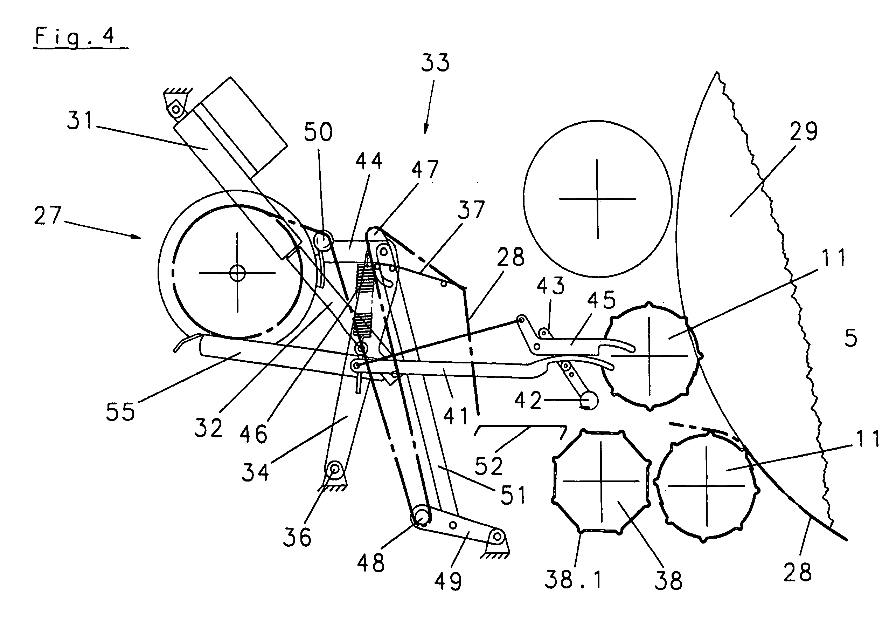

An dem Schwenkarm 34 wiederum sind Teile 39 und 41 der Schneidvorrichtung angeordnet, die somit je nach Stellung des Schwenkarms 34, und damit der verfahrbaren Seite 32 des Linearantriebs, durch die mit einer Schneidkante versehene Schneidestange 42 das Wickelmaterial 28 durchtrennt. Der vollständige Rückzug der verfahrbaren Seite 32 zum Linearantrieb 31 hin, wie weiter unten beschrieben, sorgt für die notwendige Verschwenkung des Schneidarms 43 mit zugehöriger Schneidstange 42 und entsprechend für eine Durchtrennung des Wickelmaterials 28 (Fig. 4).

Eine Bremse 44 zum Bremsen und Stoppen der Wickelmaterialabgabe aus dem Vorratsspeicher 27 wirkt unter Einfluss eines Kraftspeichers 46 in Anlage mit einer Bremsscheibe des Vorratsspeichers 27 und unterbindet daher während der Phase der Zuführung von Wickelmaterial 28 zum Förderelement 38 die Abgabe von Wickelmaterial 28. Erst dann, wenn das freie Ende des Wickelmaterials 28 von der Zuführvorrichtung abgegeben wurde und weitertransportiert wird, löst sich wie unten beschrieben die Bremse 44. Das Wickelmaterial 28 wird über an den Enden des Schwenkarms 34 angeordnete Umlenkungen 47, die beispielsweise eine quer zur Zylindermantelfläche des Erntegutballens 29 verlaufende Stange aufweist, geführt. Des weiteren wird das Wickelmaterial über eine weitere Umlenkung 48 geleitet, die an den Enden eines Hebelarms 49 angeordnet ist, so daß durch die mehrfache Umlenkung des Wickelmaterials 28 durch die Zuführvorrichtung ein Wickelmaterialspeicher ausgebildet wird, der bei Überführung des Wickelmaterials 28 anstatt des Vorratsspeichers 27 Wickelmaterial abgibt. Dieses ist besonders vorteilhaft, da somit verhindert wird, daß während der Bewegung der Zuführvorrichtung beliebig viel Material 28 von der Vorratsquelle 27 abgezogen wird und das Material 28 somit kontrollierter geführt werden kann. Daher ist keine Zugkraft zur Einführung notwendig, wodurch ein leichteres Erfassen und Weiterfördern durch das Förderelement 38 ermöglicht wird. Das Förderelement 38 ist walzenförmig mit Querförderkanten 38.1 ausgebildet, was die Förderwirkung unterstützt.

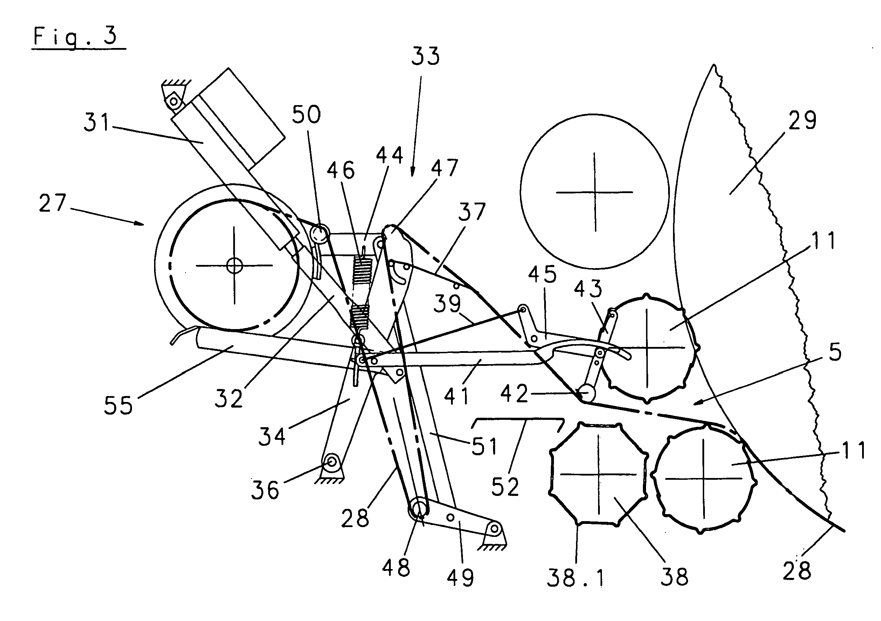

Nach der Übergabe des Wickelmaterials 28 an das Förderelement 38 und erfolgter Erfassung durch den drehenden Ballen 29, wird der Linearantrieb 31 in die in Figur 3 gezeigte Stellung gebracht, die einer Abgabestellung entspricht. Das Wickelmaterial 28, welches nun um den Erntegutballen 29 gewickelt wird, verläuft vom Vorratsspeicher 27 über die Umlenkungen 50, 48 und 47 unter Kontakt mit der Führungsplatte 37 und der Schneidstange 42 durch den Einlass 5 in die Ballenkammer 3, wo es den Ballen 29 einwickelt.

Aufgrund des Zuges, der von dem Wickelmaterial 28 auf die Umlenkung 48 ausgeübt wird, verschwenkt der Hebelarm 49 in der Bildebene nach oben in Richtung Bremse 44, so daß ein ebenfalls an dem Hebelarm 49 angeordneter Hebel 51, der anderenends an der Bremse 44 befestigt ist, diese lockert. Bei Aufbau eines Zuges aufgrund des sich um den Erntegutballen 29 wickelnden Wickelmaterials 28 wird also automatisch in Abhängigkeit der Zugspannung die Bremse 44 gelockert und die Abgabe von Wickelmaterial 28 freigegeben. Somit ist erst dann, wenn auch wirklich Wickelmaterial 28 aus dem Vorratsspeicher 27 benötigt wird, dieses freigegeben.

Wenn der Erntegutballen entlang seiner Mantelfläche komplett mit Wickelmaterial 28 eingewickelt ist, fährt der Linearantrieb 31 in die in Figur 4 dargestellte Stellung ein. Durch den Einzug der verfahrbaren Seite 32 des Linearantriebs 31 wird die Klinke 45 um ihre Schwenkachse 45.1 verschwenkt, so daß sich der Schneidarm 43 durch die Reibung mit dem laufenden Wickelmaterial 28 an der Schneidstange 42 in die in Fig. 4 gezeigte Stellung bewegt und die Schneidkante/klinge das Wickelmaterial 28 durchtrennt. Im gleichen Augenblick läßt der Zug auf die Umlenkungen 47, 48 und 50 nach, so daß die Bremse aus ihrer gelockerten Stellung wieder in die Brems- oder Stopstellung überführt wird und die weitere Abgabe von Wickelmaterial 28 aus dem Vorratsspeicher 27 verhindert wird.

Für die Zuführung von Wickelmaterial 28 in Richtung Einlass 5 fährt die Zuführvorrichtung 33 wieder in die in Fig. 2 dargestellte Position aus und legt das Wickelmaterial auf dem Zuführtisch 52, bzw. auf dem Förderelement 38 ab. Nach dem Ergreifen des Wickelmaterials 28 durch das Förderelement 38 wird das im Speicher zur Verfügung stehende Wickelmaterial 28 annähernd zugfrei entnommen, so daß eine einfache Einführung des Wickelmaterials 28 in die Wickelkammer 3 möglich ist. Wenn dann nach dem Erfassen des Wickelmaterials 28 durch den drehenden Ballen 29 von einem Sensor die Abgabe von Wickelmaterial 28 aus dem Vorratsspeicher 27 angezeigt wird, fährt die Zuführvorrichtung 33 wieder in ihre Abgabestellung (Fig. 3), in der die Bremskraft aufgrund der geänderten Umschlingung 47, 48 vergrößert ist, so daß das inzwischen in der Wickelkammer 3 um den Ballen 29 geführte Material 28 straff um den Erntegutballen gewickelt wird.

Ein Tasthebel 55 sorgt für eine derart geregelte Bremskraft, daß auch bei kleiner werdender Vorratsrolle des Vorratsspeichers 27 eine gleichbleibende Wickelmaterialspannung um den Erntegutballen 29 gewährleistet ist.

Der Zuführtisch 52 dient ebenfalls der besseren Übergabe des Wickelmaterials 28.

Somit ist also eine Maschine 1 geschaffen, bei der mittels eines einfachen Stellelements 31 verschiedene Stellungen der Wickelvorrichtung realisierbar sind, wobei insbesondere aufgrund des Förderelements 38 eine funktionssichere Zuführung von Wickelmaterial 28 in die Ballenkammer 3 gewährleistet ist.

Statt eines elektromotorischen Stellmittels 31 kann es sich natürlich auch um andere beispielsweise mechanische oder hydraulische Stellmittel handeln.

## Patentansprüche

1. Maschine zum Aufnehmen und Pressen von landwirtschaftlichem Erntegut, wie Heu, Stroh oder Anwelkgut oder dgl., mit einer Ballenkammer (3) zur Erstellung eines Erntegutballens (29) und mit einer Wickelvorrichtung (26) zur Einfassung des Erntegutballens (29) mit einem Wickelmaterial (28), wobei die Wickelvorrichtung (26) einen Vorratsspeicher (27) zur Bevorratung von Wickelmaterial (28), eine Schneidvorrichtung und eine das Wickelmaterial (28) transportierende Zuführvorrichtung aufweist, welche aus einer Betriebsstellung in eine Zuführstellung überführbar ist, wobei die Wickelvorrichtung (26) einen Zwischenspeicher zur Zwischenspeicherung von Wickelmaterial (28) aufweist, aus dem während des Zuführvorgangs Wickelmaterial (28) entnehmbar ist, **dadurch gekennzeichnet, dass** die Wickelvorrichtung (26) ein der Zuführvorrichtung zumindest bereichsweise nachgeordnetes Förderelement (38) aufweist, das in der Zuführstellung der Zuführvorrichtung das Wickelmaterial (28) übernimmt und in Richtung des Einlasses (5) der Ballenkammer (3) weiterfördert.

2. Maschine nach Anspruch 1, **dadurch gekennzeichnet, dass** die Wickelvorrichtung (26) aus einer Zuführstellung über eine Abgabestellung in eine Schneidstellung zum Durchtrennen des Wickelmaterials (28) verstellbar ist.

3. Maschine nach einem der Ansprüche 1 oder 2, **dadurch gekennzeichnet, dass** die Zuführvorrichtung durch Umlenkung der Wickelmaterialbahn den Zwischenspeicher ausbildet.

4. Maschine nach Anspruch 1, **dadurch gekennzeichnet, dass** das Förderelement (38) als Walze ausgebildet ist.

5. Maschine nach Anspruch 4, **dadurch gekennzeichnet, dass** das Förderelement (38) in der Zuführstellung der Zuführvorrichtung mit Teilen dieser eine Wickelmaterialführungsbahn ausbildet.

6. Maschine nach einem der Ansprüche 4 oder 5, **dadurch gekennzeichnet, dass** das schwerkraftbeaufschlagte Wickelmaterial (28) in der Zuführstellung einen Kontakt mit dem Förderelement (38) ausbildet.

7. Maschine nach einem der Ansprüche 4 bis 6, **dadurch gekennzeichnet, dass** das Förderelement (38) in etwa mittig vor dem Einlass (5) der Ballenkammer (3) angeordnet ist.

8. Maschine nach einem der Ansprüche 1 bis 7, **dadurch gekennzeichnet, dass** die Wickelvorrichtung (26) zumindest eine Bremse (44) zum Bremsen und/oder Stoppen der Wickelmaterialabgabe des Vorratsspeichers (27) aufweist.

9. Maschine nach Anspruch 8, **dadurch gekennzeichnet, dass** die Bremse (44) bei alleiniger Abgabe von Wickelmaterial (28) aus dem Zwischenspeicher eine die Wickelmaterialabgabe aus dem Vorratsspeicher (27) verhindernde Stellung einnimmt.

10. Maschine nach Anspruch 9, **dadurch gekennzeichnet, dass** die Bremse (44) eine durch das Wickelmaterial (28) kraftbeaufschlagbare Hebelanordnung (33) aufweist, die bei Abzug des Wickelmaterials (28) durch den drehenden Ballen (29) eine die auf das abzuziehende Wickelmaterial (28) wirkende Bremskraft vermindernde Stellung einnimmt.

11. Maschine nach einem der Ansprüche 1 bis 10, **dadurch gekennzeichnet, dass** die Zuführvorrichtung einen Schwenkarm (34), der um eine gehäusefest gelagerte Achse (36) schwenkbar ist, und eine an dem Schwenkarm (34) schwenkbar angeordnete Führungsplatte te (37) aufweist, wobei die Führungsplatte (37) mit dem Schwenkarm (34) in der Betriebsstellung einen minimalen und in der Zuführstellung einen maximalen Winkel ausbildet.

12. Maschine nach einem der Ansprüche 1 bis 11, **dadurch gekennzeichnet, dass** die Bremskraft in Abhängigkeit des Durchmessers einer Vorratsrolle des Vorratsspeichers (27) veränderbar ist.

## Claims

1. Machine for picking up and pressing harvested agricultural crops such as hay, straw or wilted crops or the like, having a baling chamber (3) for producing a bale (29) of harvested crop and having a wrapping arrangement (26) for enclosing the bale (29) of harvested crop in a wrapping material (28), the wrapping arrangement (26) having a supply store (27) for supplying wrapping material (28), a cutting device, and an introducing arrangement which transports the wrapping material (28) and which can be transferred from an operating position to an introducing position, the wrapping arrangement (26) having a temporary store for the temporary storage of wrapping material (28) from which wrapping material (28) can be taken during the introducing process, **characterised in that** the wrapping arrangement (26) has a feeding element (38) which is arranged downstream of at least a region or regions of the introducing arrangement and which, when the introducing arrangement is in the introducing position, takes over the wrapping material (28) and feeds it onward in the direction of the inlet (5) to the baling chamber (3).

2. Machine according to claim 1, **characterised in that** the wrapping arrangement (26) can be adjusted from an introducing position, via a delivering position, to a cutting position for the severing of the wrapping material (28).

3. Machine according to either of claims 1 and 2, **characterised in that** the introducing arrangement creates the temporary store by changing the direction of the path followed by the wrapping material.

4. Machine according to claim 1, **characterised in that** the feeding element (38) is in the form of a roller.

5. Machine according to claim 4, **characterised in that**, when the introducing arrangement is in the introducing position, the feeding element forms, with parts of the latter, a path for guiding wrapping material.

6. Machine according to either of claims 4 and 5, **characterised in that**, in the introducing position, the wrapping material (28), being subject to the force of gravity, makes contact with the feeding element (38).

7. Machine according to one of claims 4 to 6, **characterised in that** the feeding element (38) is arranged approximately centrally in front of the inlet (5) to the baling chamber (3).

8. Machine according to one of claims 1 to 7, **characterised in that** the wrapping arrangement (26) has at least one brake (44) for braking and/or stopping the delivery of wrapping material from the supply store (27).

9. Machine according to claim 8, **characterised in that**, when wrapping material (28) is being delivered from the temporary store alone, the brake (44) occupies a position which prevents wrapping material from being delivered from the supply store (27).

10. Machine according to claim 9, **characterised in that** the brake (44) has a lever arrangement (33) to which force can be applied by the wrapping material (28) and which, when the wrapping material (28) is being drawn out by the rotating bale (29), occupies a position which reduces the braking force acting on the wrapping material (28) which is being drawn out.

11. Machine according to one of claims 1 to 10, **characterised in that** the introducing arrangement has a pivoting arm (34) which is pivotable about a shaft (36) mounted to be solid with the main frame, and a guide plate (37) arranged to be pivotable on the pivoting arm (34), the guide plate (37) making a minimum angle with the pivoting arm (34) in the operating position and a maximum angle therewith in the introducing position.

12. Machine according to one of claims 1 to 11, **characterised in that** the braking force is variable as a function of the diameter of a supply reel in the supply store (27).

## Revendications

1. Machine pour ramasser et presser des produits agricoles de récolte tels que du foin, de la paille ou des produits séchés ou produits analogues, comprenant une chambre aval (3) pour former une balle de produit (29) et un dispositif d'enroulement (26) pour enrouler la balle de produit de récolte (29) avec une bande d'enveloppement (28), le dispositif d'enroulement (26) ayant une réserve (27) pour fournir la bande d'enveloppement (28), un dispositif de coupe et un dispositif d'alimentation pour transporter la bande d'enveloppement (28), ce dispositif d'alimentation pouvant passer d'une position de fonctionnement à une position d'alimentation, le dispositif d'enroulement (26) ayant un réserve intermédiaire pour recevoir de façon intermédiaire la bande d'enveloppement (28) et d'où la bande (28) est prélevée au cours de l'opération d'alimentation,
**caractérisée en ce que**
le dispositif d'enroulement (26) comporte un élément de transfert (38) au moins en partie en aval du dispositif d'alimentation, cet élément de transfert (38) prenant la bande d'enveloppement (28) lorsque le dispositif d'alimentation est en position d'alimentation et poursuivant le transfert de la bande en direction de l'entrée (5) de la chambre aval (3).

2. Machine selon la revendication 1,
**caractérisée en ce que**
le dispositif d'enroulement (26) est actionné d'une position d'alimentation par l'intermédiaire d'une position de transfert dans une position de coupe pour couper la bande d'enveloppement (28).

3. Machine selon la revendication 1 ou 2,
**caractérisée en ce que**
le dispositif d'alimentation constitue la réserve intermédiaire en déviant la bande d'enveloppement (28).

4. Machine selon la revendication 1,
**caractérisée en ce que**
l'élément de transfert (38) est un cylindre.

5. Machine selon la revendication 4,
**caractérisée en ce que**
l'élément de transfert (38) en position d'alimentation du dispositif d'alimentation forme avec des parties de celui-ci un chemin de guidage de bande d'enveloppement (28).

6. Machine selon la revendication 4 ou 5,
**caractérisée en ce que**
la bande d'enveloppement (28) soumise à la gravité, en position d'alimentation, est en contact avec l'élément de transfert (38).

7. Machine selon l'une des revendications 4 à 6,
**caractérisée en ce que**
l'élément de transfert (38) se trouve sensiblement au milieu de l'entrée (5) de la chambre à balles (3).

8. Machine selon l'une des revendications 1 à 7,
**caractérisée en ce que**
le dispositif d'enveloppement (26) comporte au moins un frein (44) pour freiner et/ou arrêter la distribution de bande d'enveloppement à partir de la réserve (27).

9. Machine selon la revendication 8,
**caractérisée en ce que**
pour l'unique distribution de bande d'enveloppement (28) à partir de la réserve intermédiaire, le frein (44) prend une position qui interdit à la bande d'enveloppement (28) sortir de la réserve (27).

10. Machine selon la revendication 9,
**caractérisée en ce que**
le frein (44) comporte un dispositif à levier (33) sollicité par la force développée par la bande d'enveloppement (28), et qui lors du dévidage de la bande d'enveloppement (28) par la balle (29) qui tourne, prend une position qui réduit la force de freinage appliquée à la bande d'enveloppement (28) à dévider.

11. Machine selon l'une des revendications 1 à 10,
**caractérisée en ce que**
le dispositif d'alimentation comprend un bras pivotant (34) monté sur un axe (36) solidaire du carter et une plaque de guidage (37) montée pivotante sur le bras pivotant (34), la plaque de guidage (37) formant avec le bras pivotant (34) en position de fonctionnement, un angle minimum et en position d'alimentation, un angle maximum.

12. Machine selon l'une des revendications 1 à 11,
**caractérisée en ce que**
la force de freinage est variable en fonction du diamètre de la bobine d'alimentation de la réserve (27).
